# EUROPEAN PATENT SPECIFICATION

(11) **EP 4 114 237 B1**
(45) Date of publication and mention of the grant of the patent: **04.06.2025**
(21) Application number: 21708978.8
(22) Date of filing: 26.02.2021
(51) Int. Cl.: A47J 37/04

(54) **APPARATUS FOR COOKING FOOD**
GERÄT ZUM KOCHEN VON LEBENSMITTELN
APPAREIL DE CUISSON POUR ALIMENTS

(30) Priority: 06.03.2020 GB 202003304; 22.04.2020 GB 202005859; 18.12.2020 GB 202020151
(43) Date of publication of application: 11.01.2023
(73) Proprietor: Jamali, Ghorban, Ilford Essex IG1 4PG (GB)
(72) Inventor: Jamali, Ghorban, Ilford Essex IG1 4PG (GB)
(74) Representative: Hunter, Christopher Jack Owen
(86) International application number: PCT/EP2021/054927
(87) International publication number: WO 2021/175734

(56) References cited:
- WO-A1-00/21338
- FR-A1- 2 836 036
- US-A1- 2011 283 893

## Description

The present invention relates to apparatus for cooking food and particularly but not exclusively to automated or semi-automated apparatus for cooking food (e.g. skewered food, such as kebabs) in a restaurant or takeaway.

A variety of cooking equipment is available in the art for high-volume cooking of skewered foods such as kebabs (e.g. shish kebabs) in a restaurant or takeaway environment. However, whilst such cooking equipment has the capacity to cook food on multiple skewer simultaneously, the cooking equipment in the market is labour intensive since it requires a human operator to load a cooking plate with skewered food, watch and turn the food, and finally remove the cooked food from the cooking plate.

FR 2836036 relates to cooking equipment for kebabs, comprising a pivoted heater located above a motor driven continuous chain which carries hook blocks for kebabs which both rotate and advance under the heater.

US 2011/283893 relates to a rotisserie broiler comprising at least one heating stage; a conveyor system defining a predetermined path extending from a loading region, through the at least one heating stage, and onward to an unloading region; and means for releasably holding food on the conveyor system as the food on the conveyor system is transported through the at least one heating stage, the means for releasably holding food comprising at least one food-holder support operative to support a food holder used to hold an item of food when the at least one food-holder support is conveyed by the conveyor system from the loading region to the unloading region via the at least one heating stage; wherein the predetermined path comprises: a first section extending upward from the loading region; and a substantially vertical section extending through the at least one heating stage;
wherein the at least one food-holder support comprises one or more lifting elements configured to receive part of the food holder and to allow automatic unloading of the food holder as the hook element is conveyed into the unloading region; wherein the conveyor system is configured to convey food upward through the first section, the or each lifting element comprises a first member to define a surface configured to receive a portion of the food holder wherein the first member defines a first protuberant lip configured to retain the food holder in the hook element when the hook element pivots from travelling in a first horizontal direction in the loading region to travelling in a vertical upward direction in the first section.

WO 00/21338 relates to a food cooking apparatus.

The present applicant has identified the need for an improved cooking apparatus that overcomes or at least alleviates problems associated with the prior art.

In accordance with an aspect of the present invention, there is provided apparatus for cooking food as set out in claim 1. Optional features are set out in the dependent claims.

In accordance with one embodiment of the invention, the apparatus is configured to release the food from the conveyor system automatically upon reaching the unloading region. In this way, apparatus is provided in which foods (e.g. supported foods, such as foods mounted on skewers, and unsupported foods, such as burgers and flatbreads) are cooked and unloaded (e.g. released into a collection tray) with minimal input from a human operator.

According to the present invention, the predetermined path comprises a substantially vertical section (e.g. a section extending +/- 20° from vertical, e.g. a section extending +/- 10° from vertical, e.g. a section extending +/- 5° from vertical) extending through the at least one heating stage and the conveyor system is configured to convey food downwardly along the substantially vertical section. In this way, food may be heated evenly using opposed laterally positioned heating elements whilst fat and oil released during cooking are allowed to fall vertically downwards (e.g. substantially in the path direction) rather than dropping onto the heating elements. In addition, a vertical heating stage allows efficient heating since an upper part of the vertical section will be exposed to heat rising from lower parts of the vertical section.

In a first group of embodiments, which does not form part of the present invention, the means for releasably holding food comprises first and second conveyor surfaces defined by the conveyor system, the first conveyor surface being operative to engage a first surface (e.g. support an underside surface) of the food and the second conveyor surface being operative to engage a second surface of the food (e.g. opposed to the first surface).

In one embodiment, the first and second conveyor surfaces are configured to engage opposed top and underside surfaces of the food respectively.

In one embodiment, the second conveyor surface is operative to move substantially in synchrony with the first conveyor surface.

In one embodiment, the first conveyor surface is defined by a primary conveyor operative to convey food along the predetermined path (e.g. conveyor operative to transfer the food from the loading region to the unloading region via the at least one heating stage) and the second conveyor surface is defined by a secondary conveyor (e.g. conveyor operative to engage the food as the food is conveyed along the substantially vertical section) operative to move along a second path.

In one embodiment, the second conveyor is operative to move in an opposed rotary direction to the primary conveyor.

In one embodiment, the primary and secondary conveyors meet at a start point of the vertical section and separate at an end point of the vertical section.

In one embodiment, at least one (e.g. both) of the primary and secondary conveyors comprise a heat transmitting conveyor belt (e.g. air-permeable belt conveyor). In one embodiment, at least one (e.g. both) of the primary and secondary conveyors comprise a wire mesh belt conveyor.

In one embodiment, at least one (e.g. both) of the first and second conveyor surfaces comprise food gripping elements (e.g. an array of spikes protruding outwards from the conveyor surfaces).

According to the present invention, the means for releasably holding food comprises at least one food-holder support, the at least one food-holder support being operative to support a food holder used to hold an item of food as the at least one food-holder support is conveyed by the conveyor system from the loading region to the unloading region via the at least one heating stage.

According to the present invention, at least one of the conveyor system and the at least one food-holder support (e.g. either independently or in combination) is configured to release the food holder from the food-holder support automatically upon reaching the unloading region. For example, the apparatus may be configured to automatically release the food holder (e.g. release the food holder from the at least one food-holder support or release the food holder and the food-holder support (or a part thereof) from the conveyer system) when the at least one food-holder support reaches a predetermined release orientation (e.g. predetermined rotational release orientation) or to automatically release the food holder when the at least one food-holder support reaches a release point along the conveyor system where the positioning (e.g. lateral and/or longitudinal positioning) of the at least one food-holder support (e.g. relative to the food holder or relative to the conveyor system) is automatically altered to release the food holder (e.g. release the food holder from the at least one food-holder support or release the food holder and the food-holder support (or a part thereof) from the conveyor system).

In one embodiment, the at least one food-holder support is configured to release the food holder under gravity (e.g. once the at least one food-holder support reaches the predetermined release orientation or release point).

In one embodiment, the food holder comprises a full-width skewer (e.g. extending fully through the foodstuff that is skewered).

In one embodiment, the at least one food-holder support is a skewer support operative to support a skewer (e.g. skewer supporting one or more items of food to be cooked) or other type of food holder with a skewer-like mounting profile.

In one embodiment, the food-holder support is operative to support a basket (e.g. closable basket) with mounting profiles (e.g. skewer-like profiles) extending from opposed ends of the basket.

In one embodiment, the food holder comprises a pair of skewer parts (e.g. engaging opposed lateral sides of the foodstuff that is skewered).

In one embodiment, the at least one food-holder support is configured to support a skewer such that the skewer extends transversely relative to the path (e.g. from one lateral side of the path to an opposed lateral side of the path).

In one embodiment, the at least one food-holder support comprises first and second laterally spaced support elements (e.g. configured to receive opposed end parts of a skewer).

In one embodiment, the conveyor system is a looped conveyor system (e.g. a conveyor system formed in a continuous loop).

According to the present invention, the at least one food-holder support comprises one or more hook elements configured to receive part of a food holder (e.g. to receive part of skewer or to receive part of a skewer-like mounting profile of an alternative food holder)).

In one embodiment, the at least one food-holder support comprises first and second laterally spaced hook elements (e.g. configured to receive opposed end parts of a food holder (e.g. receive opposed end parts of a skewer or skewer-like mounting profile)).

In the case of a conveyer system comprising first and second laterally spaced conveyor elements, the first and second laterally spaced hook elements may be supported by the first and second laterally spaced conveyer elements respectively (e.g. the first hook element may be provided on the first conveyer element and the second hook element may be provided on the second conveyor element).

According to the present invention, the or each hook element comprises first and second jaw members spaced to define an opening configured to receive a portion (e.g. end portion) of a food holder (e.g. skewer or alternative food holder with a skewer-like mounting profile). In one embodiment, the first and second jaw members define first and second inner surfaces (e.g. first and second curved inner surfaces) respectively.

In one embodiment, at least one of (e.g. each of) the first and second jaw members defines a protuberant lip (e.g. positioned at the opening) configured to retain the food holder (e.g. skewer or alternative food holder with a skewer-like mounting profile) in the hook element as the hook element pivots over a predetermined angle range. In this way, as the hook element pivots and the food holder (e.g. skewer or alternative food holder with a skewer-like mounting profile) moves along the respective inner surface of the hook element towards the opening, the food-holder may be retained in the hook element over the predetermined angle range.

According to the present invention, the first jaw member defines a first protuberant lip configured to retain the food-holder (e.g. skewer or alternative food holder with a skewer-like mounting profile) in the hook element as the hook element pivots from travelling in a first horizontal direction in the loading region (first advancement orientation) to travelling in a vertical upward direction in the first section (second advancement orientation e.g. substantially perpendicular to the first advancement orientation).

According to the present invention, the second jaw member defines a second protuberant lip configured to retain the food-holder (e.g. skewer or alternative food holder with a skewer-like mounting profile) in the hook element as the hook element pivots from travelling in the first horizontal direction in the substantially horizontal section to travelling in a vertical downward direction in the substantially vertical section (third advancement orientation e.g. substantially perpendicular to the first advancement orientation and substantially antiparallel to the second advancement orientation).

In one embodiment, the hook element is configured to release a held food holder (e.g. held skewer)(e.g. allow the food holder to drop from the opening under gravity) as the hook element pivots into an unloading orientation (e.g. pivots from the first, second or third advancement orientations into the unloading orientation).

In one embodiment, the unloading orientation is substantially antiparallel to the first advancement orientation (e.g. and substantially perpendicular to the second and third advancement orientations).

In one embodiment, the second and third advancement orientations correspond to sections of the path where the conveyor system is travelling between different vertical heights (e.g. travelling in a substantially upward direction and travelling in a substantially downward direction respectively). According to the present invention, the second and third advancement orientations correspond to sections of the path extending in a substantially vertical direction (e.g. where the conveyor system is travelling in a substantially upward vertical direction and travelling in a substantially downward vertical direction respectively). In another embodiment, which does not form part of the present invention, the second and third advancement orientations correspond to sections of the path extending in an inclined upward direction and in an inclined downward direction respectively).

In one embodiment, the first advancement orientation and unloading orientation correspond to sections of the path where the conveyer system is travelling between different horizontal positions (e.g. travelling in a substantially first lateral direction and travelling in a substantially second lateral direction opposed to the first lateral direction). In one embodiment, the first advancement orientation and the unloading orientation correspond to sections of the path extending in a substantially horizontal direction (e.g. where the conveyor system is travelling in a substantially first horizontal direction and travelling in a substantially second horizontal direction opposed to the first horizontal direction).

In one embodiment, the or each hook element is configured to maintain a predetermined orientation relative to the conveyor system such that the opening is always facing a predetermined direction relative to the direction of travel of the conveyor system (e.g. at the point the hook element is provided on the conveyor system).

In one embodiment, the or each hook element is configured to maintain a predetermined substantially perpendicular orientation such that the opening is always facing substantially perpendicular to the direction of travel.

In one embodiment, the or each hook element comprises a shank portion extending substantially perpendicular to the direction of travel.

In one embodiment, the apparatus further comprises at least one guide element (e.g. pair of guide elements) operative to maintain a held food holder (e.g. skewer or alternative food holder with a skewer-like mounting profile) in a predetermined orientation (e.g. rotational orientation) and/or position relative to the at least one food-holder support as the at least one food-holder support moves relative to the at least one guide element. In this way, accurate orientation/positioning of the food holder may be maintained as the conveyor system passes the at least one guide element.

In one embodiment, the at least one guide element is positioned along at least one section of the predetermined path.

In one embodiment, the at least one guide element is provided along one of the second and third advancement directions and is configured to maintain the held food holder in the predetermined rotational orientation as the hook element travels along said second or third advancement direction (e.g. positioned along a section of the predetermined path extending through the at least one heating stage).

In the case of a food-holder support with one or more hook element, the at least one guide element (e.g. pair of guide elements) may be laterally spaced from (e.g. an adjacent to) the or each hook element. In this way, the at least one guide element may be urged against the held food holder without interfering with the one or more hook element.

In one embodiment, the at least one guide element comprises at least one guide bar.

In the case that the at least one guide element is positioned along a substantially vertical section of the predetermined path (e.g. the substantially vertical section extending through the at least one heating stage), the at least one guide element may comprise a substantially vertically extending guide element (e.g. at least one vertically extending guide bar).

In the case of apparatus including the at least one guide element, the use of a protuberant lip on only one of the first and second jaw members may be adequate (e.g. with the protuberant lip retaining the food holder in the hook element along one of the second and third advancement directions and the at least one guide element performing this function along the other of the second and third advancement directions). However, the skilled reader will recognise that protuberant lips may be provided on each of the first and second jaw members provided the at least one guide element will not interfere with the jaw members. Furthermore, the skilled reader will recognise that if at least one guide element is provided along each of the first and third advancement directions then the protuberant lip may be omitted from each of the first and second jaw members.

In one embodiment, the conveyor system comprises a conveyer chain system (e.g. endless conveyer chain system).

In one embodiment, the conveyer chain system comprises at least one chain (e.g. at least one roller chain) and a chain drive mechanism operative to drive movement of the at least one chain.

In one embodiment, the chain drive mechanism comprises a plurality of sprockets operative to engage the at least one chain at a plurality of points along the predetermined path and drive movement (e.g. circulation) of the transport chain.

In one embodiment, the chain system comprises first and second laterally spaced chains driven by a chain drive mechanism.

In one embodiment, the at least one food-holder support is integrally formed as part of a link plate of the at least one chain (e.g. integrally formed as part of an outer link plate connected (via link pins) between a pair of inner link plates or integrally formed as part of an inner link plate connected (via link pins) between a pair of outer link plates).

In the case the at least one food-holder support comprises first and second laterally spaced food-holder support elements and the chain drive mechanism comprises first and second laterally spaced chains, the first food-holder support element may be integrally formed as part of a first link plate of the first chain and the second food-holder support element may be integrally formed as part of a second link plate of the second chain.

According to the present invention, the predetermined path extends along a (e.g. first) heating path extending through the at least one (e.g. first) heating stage.

In one embodiment, the at least one heating stage comprises a single heating surface and the heating path extends alongside the single heating surface.

In one embodiment, the conveyor system extends alongside the single heating surface in a plane substantially parallel to the single heating surface.

In another embodiment, the heating stage comprises opposed first and second heating surfaces and the heating path extends between the opposed first and second heating surfaces.

In one embodiment, the conveyor system extends between the first and second heating surfaces in a plane substantially parallel to the first and second heating surfaces.

In one embodiment, the at least one heating stage comprises a first heating stage and a second heating stage arranged in series with the first heating stage.

In one embodiment, the predetermined path extends along a first heating path extending through the first heating stage and a second heating path extending through the second heating stage.

In one embodiment, the first heating stage comprises a first single heating surface and the first heating path extends alongside the first single heating surface.

In one embodiment, the first heating stage comprises (e.g. a first pair of) opposed heating surfaces and the first heating path extends between the opposed heating surfaces.

In one embodiment, the second heating stage comprises a second single heating surface and the second heating path extends alongside the second single heating surface.

In one embodiment, the conveyor system extends alongside the second single heating surface in a plane substantially parallel to the second single heating surface.

In another embodiment, the second heating stage comprises (e.g. a second pair of) opposed heating surfaces and the second heating path extends between the opposed heating surfaces.

In one embodiment, the conveyor system extends between the (e.g. second pair of) of opposed heating surfaces of the second heating stage in a plane substantially parallel to the opposed heating surfaces of the second heating stage.

In one embodiment, the first heating path extends in a substantially opposed direction to the second heating path.
In one embodiment, the first heat path extends between a first set of different vertical heights.

In on embodiment, the second heating path extends between a second set of different vertical heights (e.g. different to or the same as the first set of different vertical heights).

In one embodiment, the first heating path extends substantially upwards (e.g. in an inclined upward direction or in a substantially vertical upward direction).

In one embodiment, the second heating path extends substantially downward (e.g. in an inclined downward direction or in a substantially vertical downward direction).

In one embodiment, the first heating path extends substantially vertically (e.g. extends +/- 20° from vertical, e.g. extends +/- 10° from vertical, e.g. extends +/- 5° from vertical).

In one embodiment, the second heating path extends substantially vertically (e.g. extends +/- 20° from vertical, e.g. extends +/- 10° from vertical, e.g. extends +/- 5° from vertical).

In one embodiment, the conveyor system is configured to present the at least one food-holder support part in a loading orientation as the at least one food-holder support passes through the loading region.

In one embodiment, the loading orientation is an upright loading orientation (e.g. in which the food holder is dropped vertically into the food-holder support). In the case of a food-holder support in the form of a hook element, the opening will face upwards in the upright loading orientation.

In another embodiment, the loading orientation is a non-vertical loading orientation (e.g. in which the food holder is inserted substantially horizontally or at an angle to vertical into the food-holder support). In the case of a food-holder support in the form of a hook element, the opening will face in an inclined orientation to vertical (e.g. face substantially horizontally).

In one embodiment, the conveyer system is configured to provide an inclined non vertical loading orientation that is 15-20° off vertical.

In one embodiment, the conveyor system is configured to present the at least one food-holder support part in a heating orientation (e.g. in the case of apparatus comprising first and second heating stages, a first heating orientation associated with the first heating stage and a second heating orientation associated with the second heating stage).

In one embodiment, the conveyor system is configured to present the at least one food-holder support part in an unloading orientation.

In one embodiment, the or each heating orientation is substantially inclined to the unloading orientation. For example, in one embodiment, the or each heating orientation may be substantially perpendicular to the unloading orientation.

In one embodiment, the unloading orientation is a downward unloading orientation. In the case of a food-holder support comprising one or more hook element, in one embodiment the opening of the or each hook element faces downwards in the downward loading orientation.

Embodiments of the invention will now be described in detail, by way of example, with reference to the accompanying drawings, in which:
Figure 1 is a schematic perspective view of apparatus for cooking food in accordance with an embodiment of the present invention;
Figure 2A is a schematic detailed perspective view of chain and food-holder support elements of the apparatus of Figure 1;
Figure 2B is a schematic side view of the chain and food-holder support elements illustrated in Figure 2A;
Figure 3 is a schematic side view of the apparatus of Figure 1 illustrating rotational the orientation of one food-holder support element as it moves along the conveyer system;
Figures 4A-C are schematic plan, side and edge views of a first type of skewer suitable for use with the apparatus of Figure 1;
Figure 5A-D are schematic representations of the skewer of Figures 4A-C when mounted in a food-holder support element of the apparatus of Figure 1 in the various rotational orientations;
Figures 6A-C are schematic plan, side and edge views of a second type of skewer suitable for use with the apparatus of Figure 1;
Figure 7A-D are schematic representations of the skewer of Figures 6A-C when mounted in a food-holder support element of the apparatus of Figure 1 in the various rotational orientations;
Figure 8A is a schematic front view of apparatus for cooking food in accordance with a second embodiment which does not form part of the present invention;
Figure 8B is a schematic cross-sectional view of the apparatus of Figure 8A;
Figure 8C is a schematic end view of the apparatus of Figure 8 A;
Figure 9A is a schematic side view of chain and food-holder support elements of the apparatus of Figure 8A;
Figure 9B is a schematic end view of the chain and food-holder support elements illustrated in Figure 9B;
Figure 10A is a schematic representation of the skewer of Figures 4A-C when mounted in a food-holder support element of the apparatus of Figure 8A in the various rotational orientations;

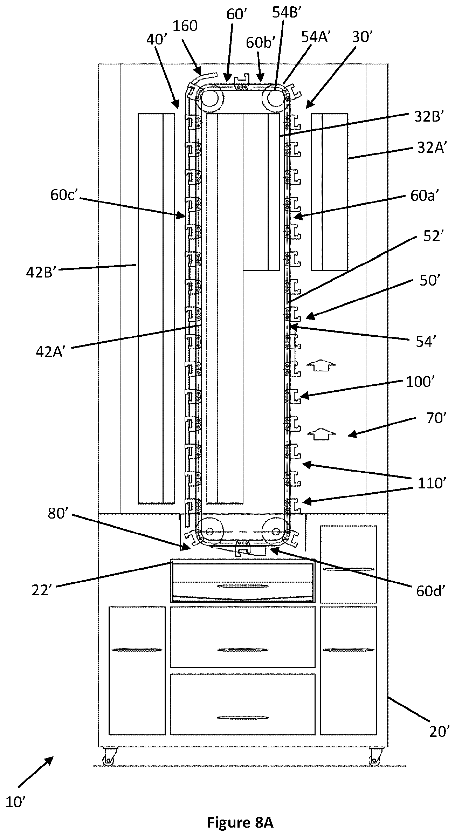

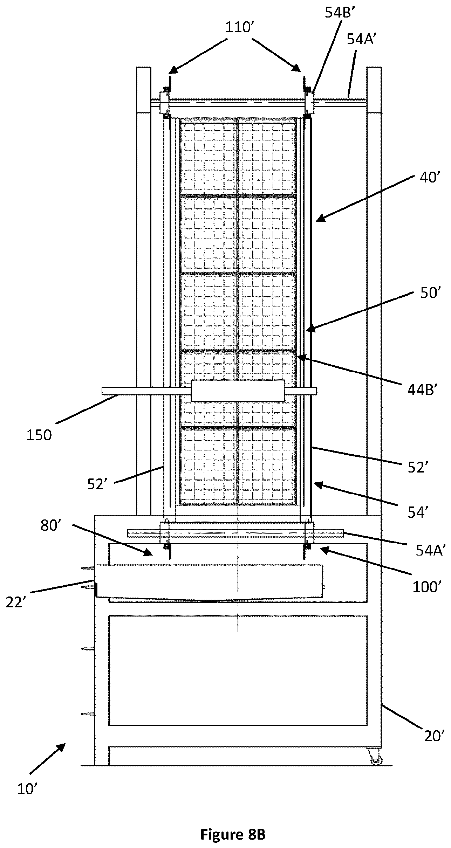

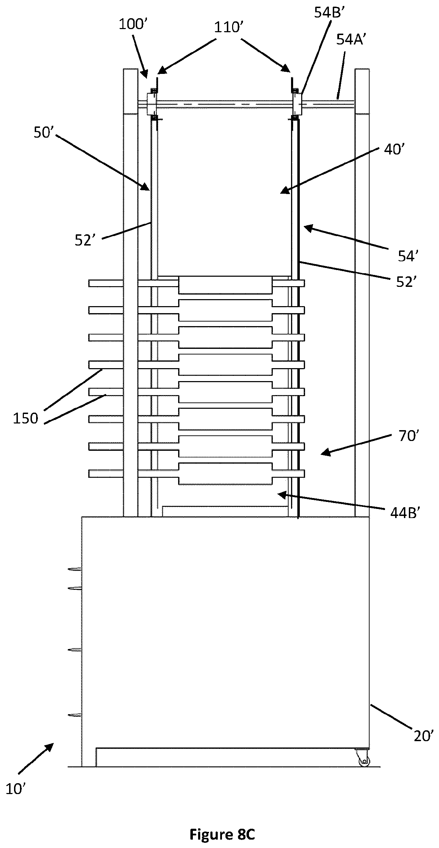

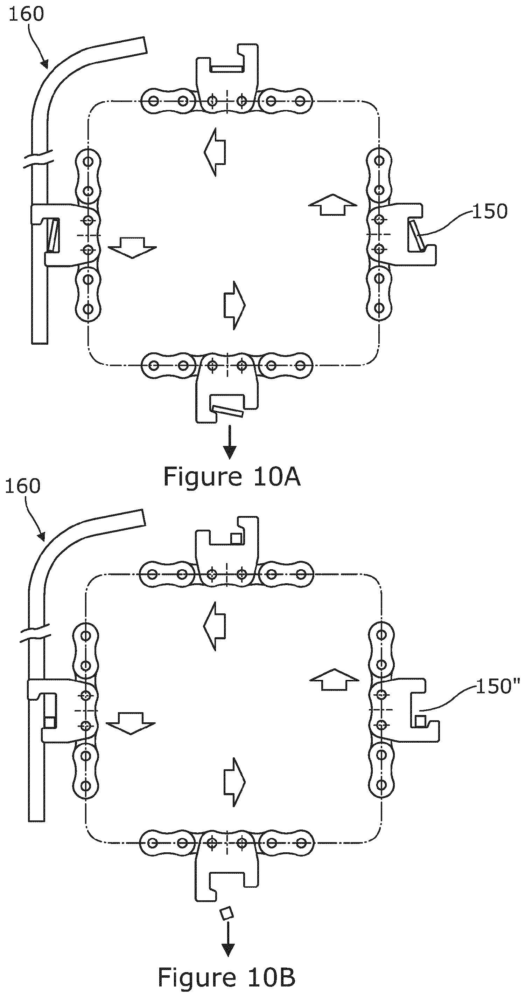

Figure 10A is a schematic representation of an alternative skewer when mounted in a food-holder support element of the apparatus of Figure 8A in the various rotational orientations;

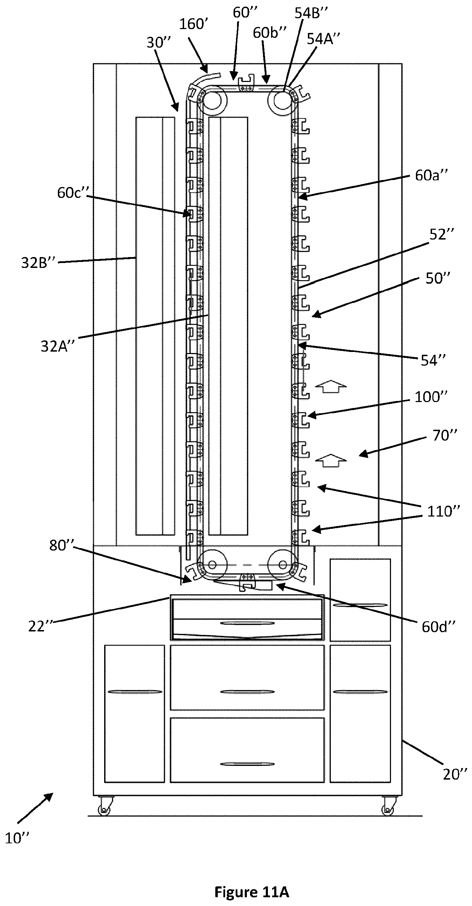

Figure 11A is a schematic front view of apparatus for cooking food in accordance with a third embodiment which does not form part of the present invention illustrated in use cooking skewered food;

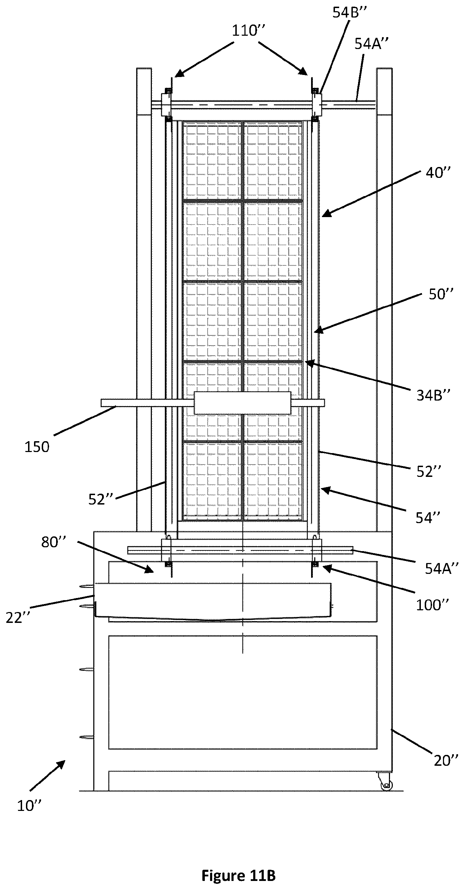

Figure 11B is a schematic cross-sectional view of the apparatus of Figure 11A illustrated in use cooking skewered food;

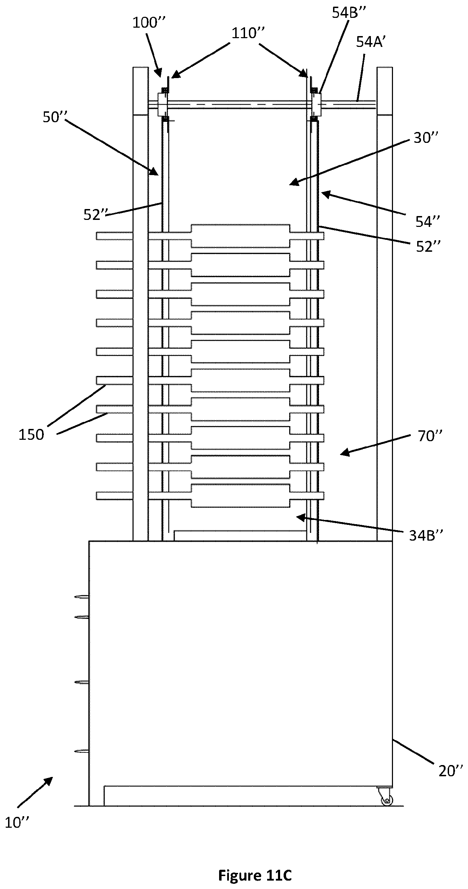

Figure 11C is a schematic end view of the apparatus of Figure 11A illustrated in use cooking skewered food;

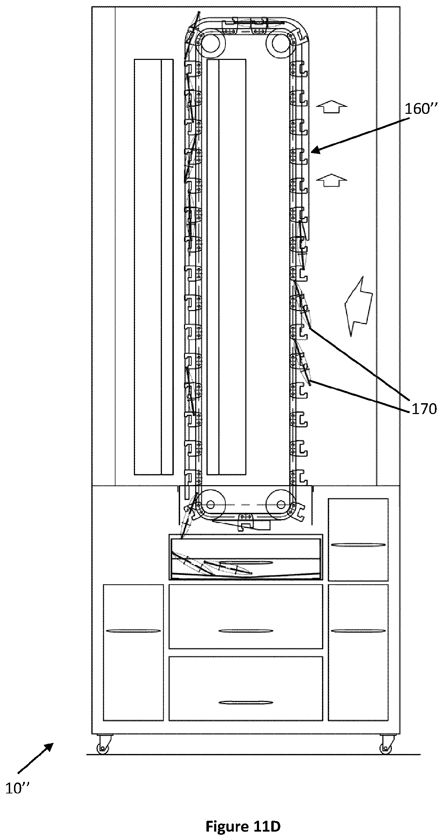

Figure 11D is a schematic front view of the apparatus of Figure 11A illustrated in use cooking food in baskets;

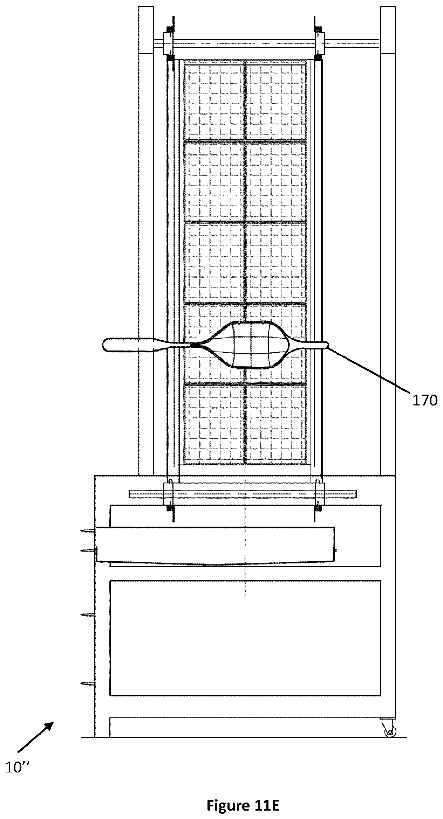

Figure 11E is a schematic cross-sectional view of the apparatus of Figure 11A illustrated in use cooking food in baskets;

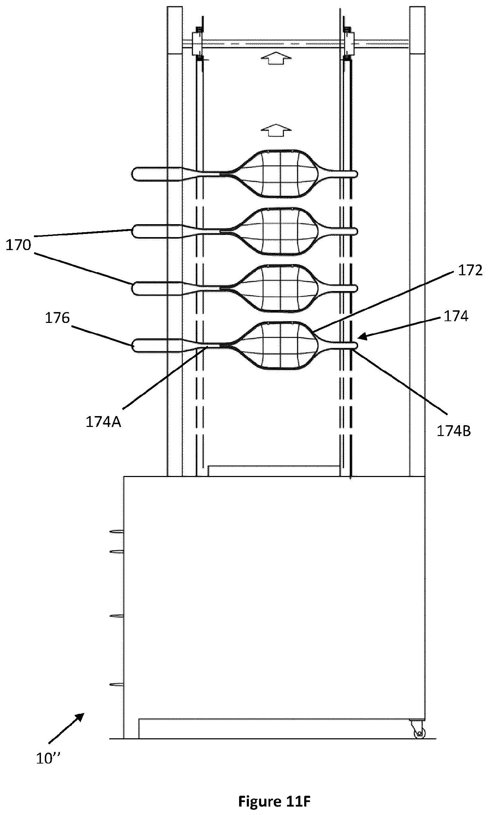

Figure 11F is a schematic end view of the apparatus of Figure 11 A illustrated in use cooking food in baskets;

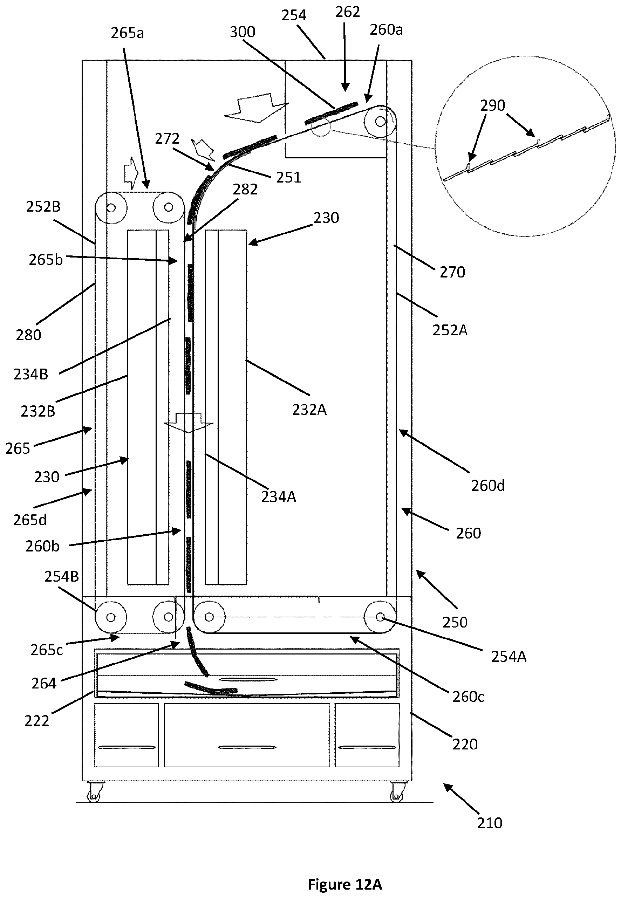

Figure 12A is a schematic front view of apparatus for cooking food in accordance with an exemplary arrangement which does not form part of the present invention;

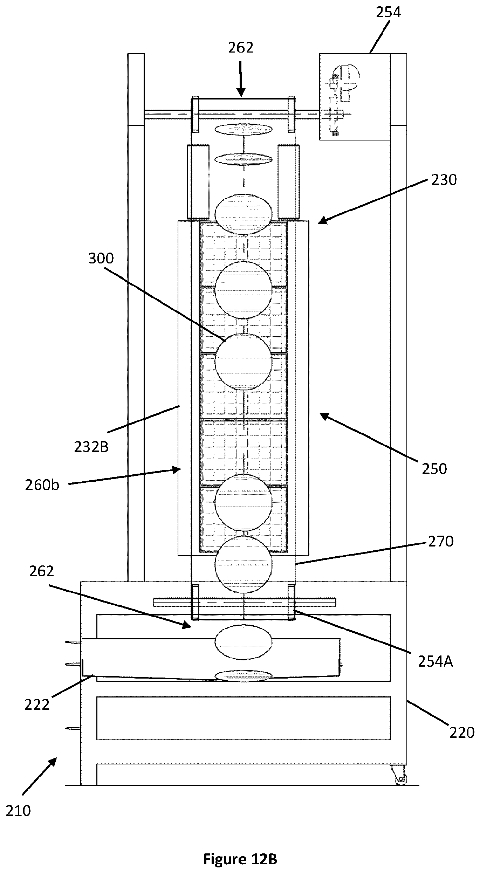

Figure 12B is a schematic cross-sectional view of the apparatus of Figure 12A;

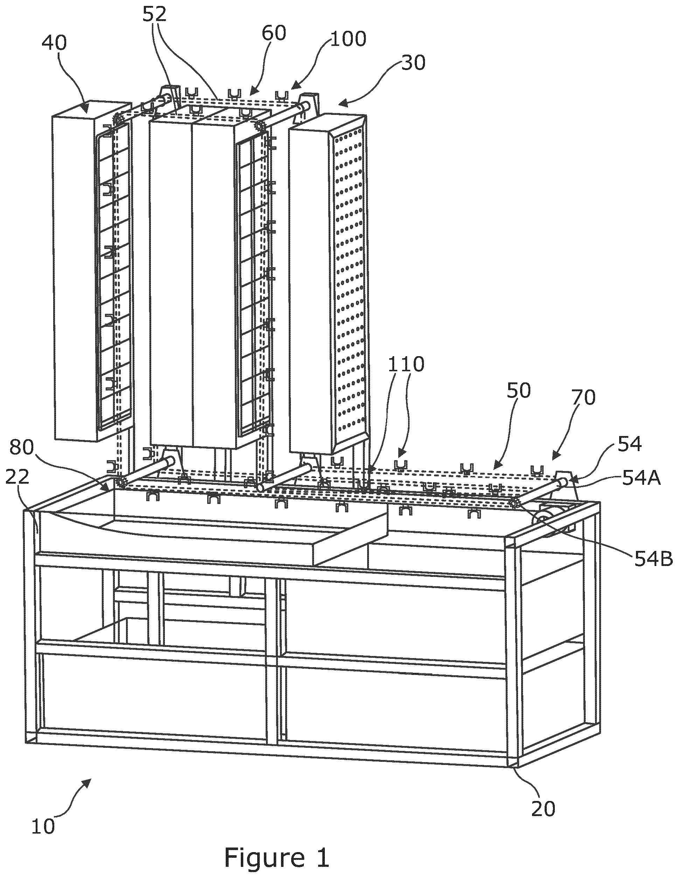

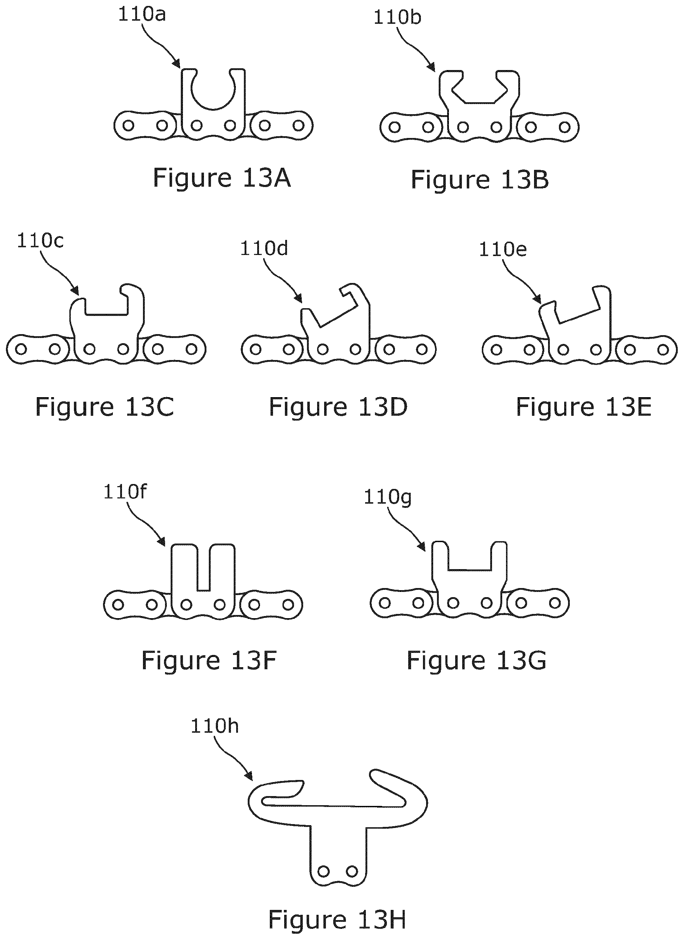

Figures 13A-H are alternative examples of food-holder support elements for use in the cooking apparatus of Figures 1, 8A and 11A;

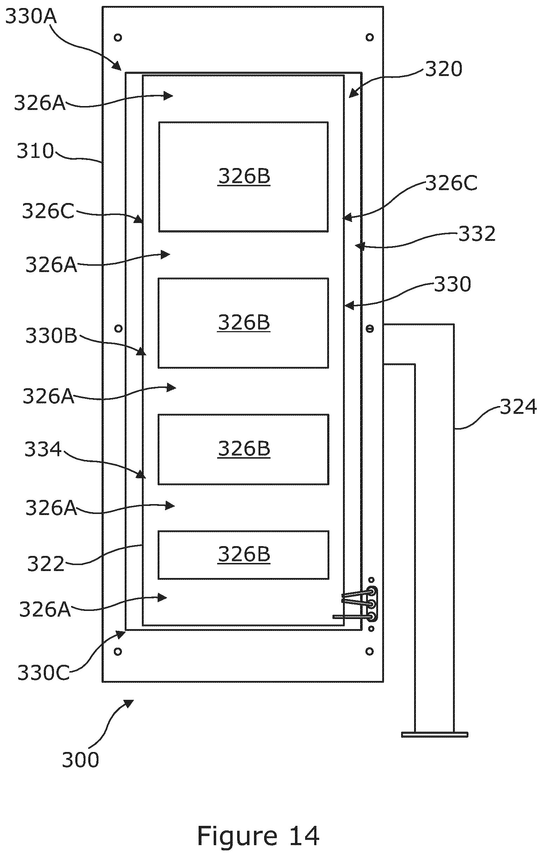

Figure 14 is a schematic front view of a gas burner in accordance with an exemplary arrangement which does not form part of the invention, for use in the cooking apparatus of Figures 1, 8A, 11A and 12A;

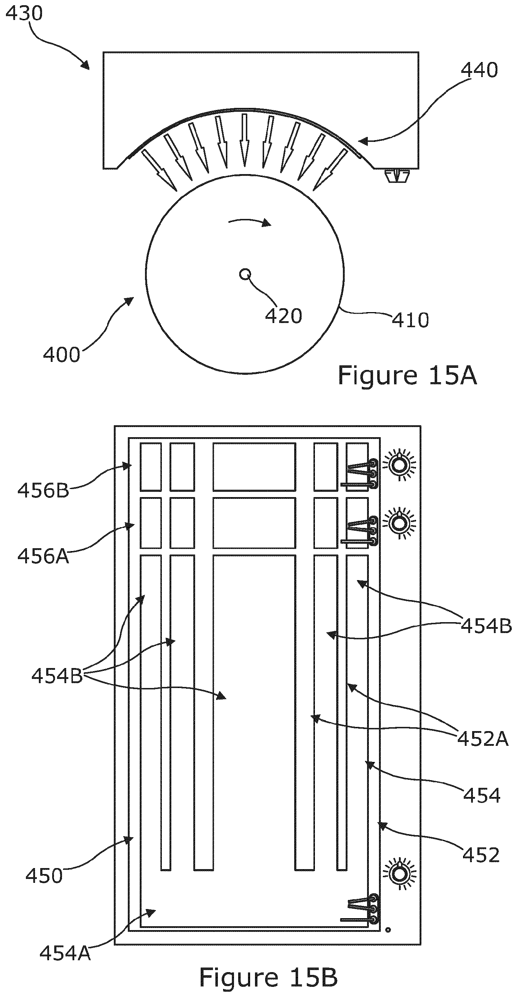

Figure 15A is a schematic plan view of a vertical rotisserie in accordance with an exemplary arrangement which does not form part of the invention; and
Figure 15B is a schematic front view of a gas burner of the vertical rotisserie of Figure 15A.
Figures 1-3 illustrate details of a semi-automated cooking apparatus 10 for cooking skewered food comprising a base unit 20 supporting: first and second vertical heating stages 30,
40 arranged in series; an endless conveyor chain system 50 defining a predetermined path 60 extending from a loading region 70, through the first and second vertical heating stages 30, 40, and onward to an unloading region 80; and a plurality of food-holder supports (or "skewer supports") 100 integrally formed with the chain conveyor system 50.

Conveyer chain system 50 comprises first and second laterally spaced roller chains 52 driven by a common chain drive mechanism 54.

Chain drive mechanism 54 comprises a plurality of drive shafts 54A each supporting end sprockets 54B operative to engage first and second roller chains 52 at a plurality of points along the predetermined path 60 and drive synchronous circulation of the roller chains 52.

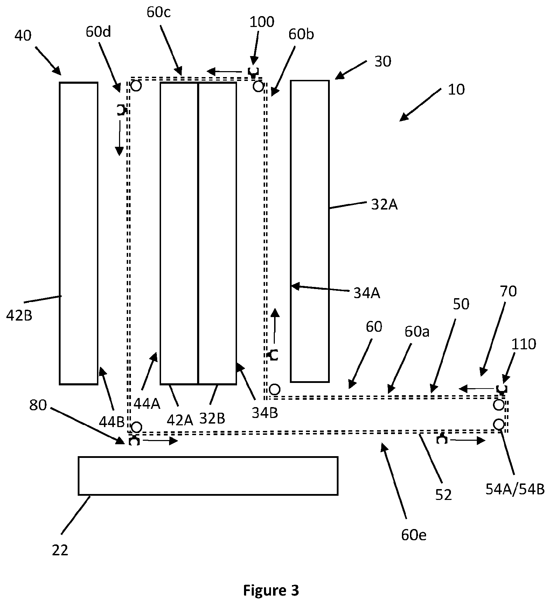

As illustrated in Figure 3, path 60 defined by conveyer chain system 50 comprises in sequence: a loading path (horizontal path section 60a); a first heating path (upward vertical path section 60b); a connecting path (horizontal path section 60c); a second heating path (downward vertical path section 60d); and an unloading path (horizontal path section 60e extending in an opposed direction to path sections 60a and 60c).

Each skewer support 100 comprises first and second laterally spaced hook elements 110 configured to receive opposed end parts of a skewer 150, 150'.

First vertical heating stage 30 comprises a first pair of opposed gas burners 32A, 32B defining first and second heating surfaces 34A, 34B with a first heating path (vertical upward path section 60b) extending therebetween. Second vertical heating stage 40 comprises a second pair of opposed gas burners 42A, 42B defining first and second heating surfaces 44A, 44B with a second heating path (vertical downward path section 60d) extending therebetween. Gas burners 32A, 32B, 44A, 44B will typically be radiant burners with a gas-permeable burner plate formed from a metal fibre mesh (e.g. steel wire mesh) or ceramic mesh ("ceramic gas burners").

A collection tray 22 is provided as part of the base unit 20 to collect the cooked food at the loading region 70 and to collect falling oil and cooking debris. An oil collection drum (not shown) may be provided beneath the collection tray 22 to receive oil from the tray.

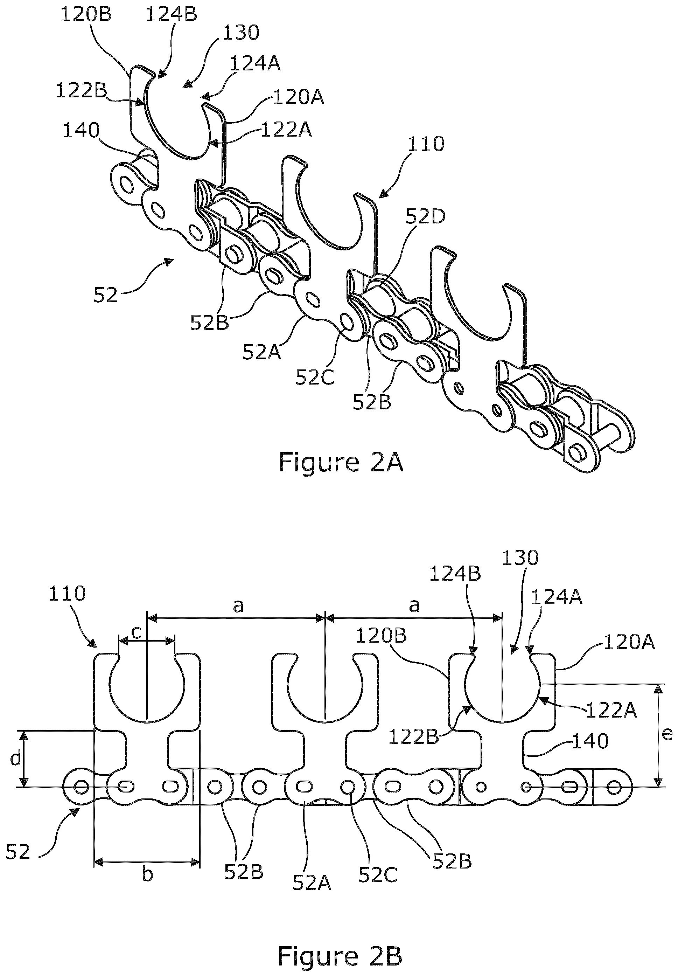

As illustrated in Figures 2A-B, each hook element 110 is integrally formed as part of an outer link plate 52A of roller chain 52 and connected to neighbouring inner link plates 52B via link pins 52C engaging rollers 52D. In this specific example, the approximate dimensions are: a = 76mm; b= 26mm; c = 25mm; d = 24mm and e = 44 mm.

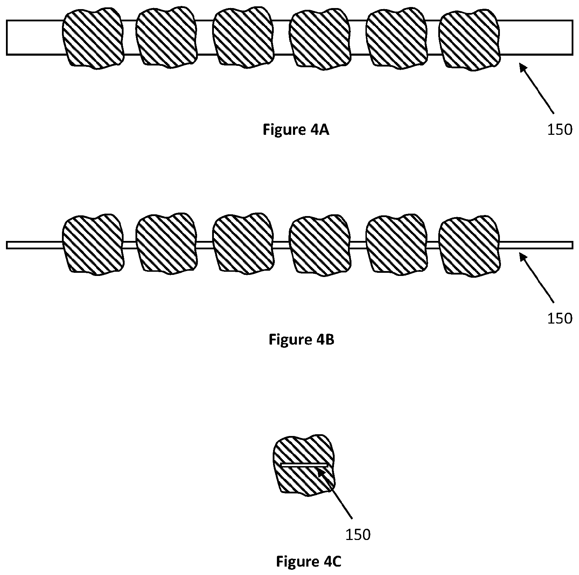

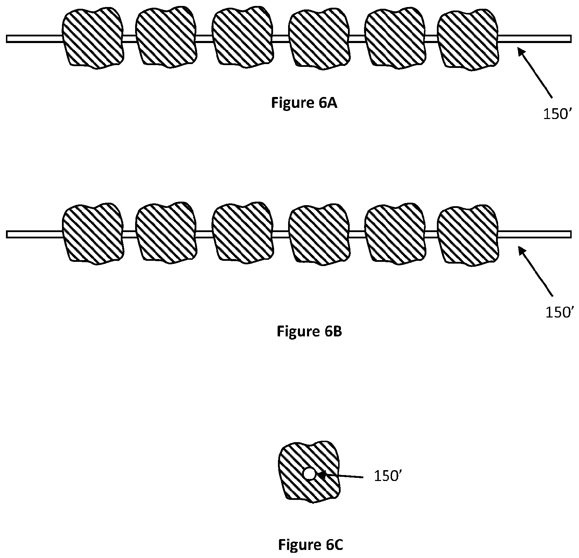

As illustrated in Figures 4A-C and 6A-C, skewer supports 100 are configured to support a wide a variety of types of full-width skewers including flat blade skewers 150 and circular skewers 150', with the skewer supports 100 being configured to hold the skewers 150, 150' in a transverse orientation relative to the direction of travel such that the longitudinal length of the skewers 150, 150' extends from one lateral side of the path 60 to an opposed later side of the path. Although a single skewer 150, 150' is illustrated, the apparatus is equally suitable for foodstuff that is supported by pairs of skewer parts inserted into opposed lateral sides of the foodstuff with one the pairs of skewer parts being received in a first hook element 110 of the skewer support 100 and the other skewer part being received in a second hook element 110 of the skewer support.

As illustrated in Figures 2A-B, each hook element 110 comprises first and second jaw members 120A, 120B spaced to define an opening 130 configured to receive an end portion of a skewer and a shank portion 140 extending substantially perpendicular to the direction of travel.

First jaw member 120A defines a first curved inner surface 122A and a first protuberant lip 124A positioned at the opening 130. Second jaw 120B member defines a second curved inner surface 122B and a second protuberant lip 124B positioned at the opening 130.

Each hook element 110 is configured to maintain a predetermined perpendicular orientation relative to the conveyor chain system 50 such that the opening 130 is always facing perpendicular to the direction of travel of the conveyor system 50.

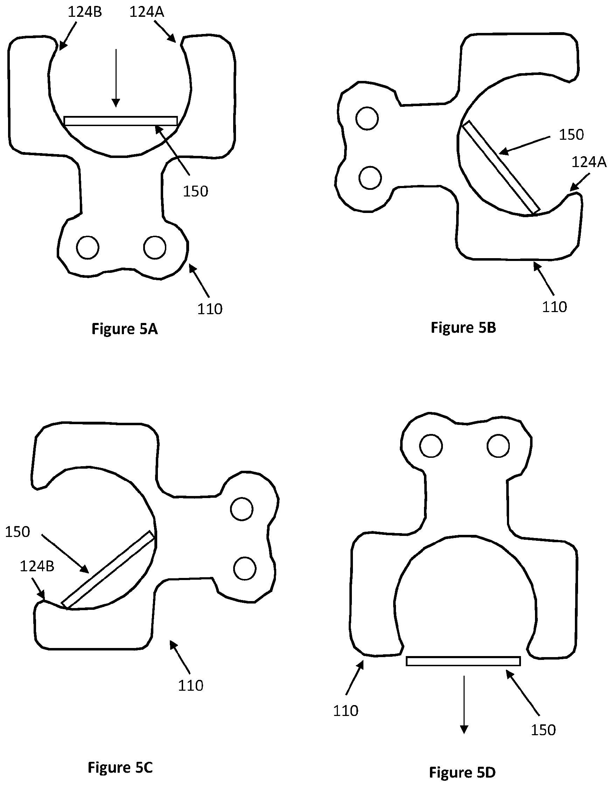

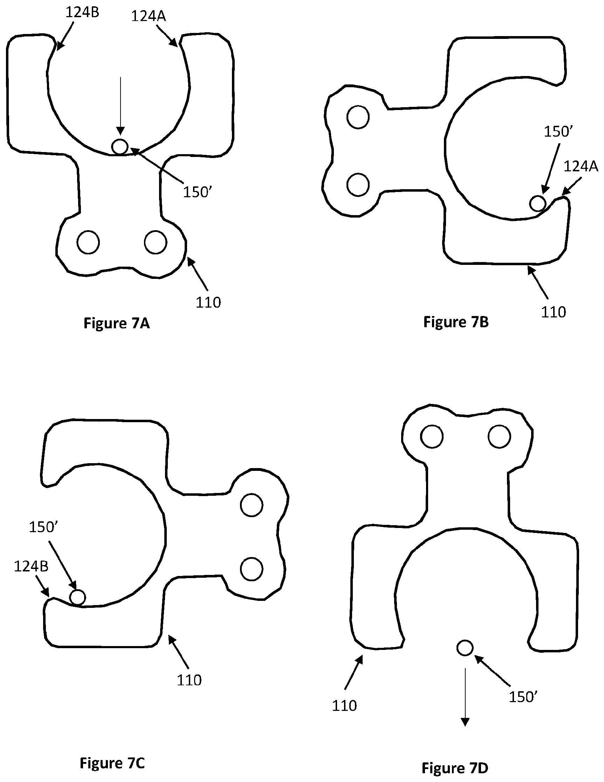

As shown in Figures 5B and 7B, first protuberant lip 124A is configured to retain a received skewer 150, 150' in the hook element 110 as the hook element 110 pivots from travelling in a first horizontal direction to travelling in a vertical upward direction (Figures 5A and 7A) and the skewer 150, 150' moves along the curved inner surface 122A of the hook element 110 towards the opening 130.

As shown in Figures 5C and 7C, second protuberant lip 124B is configured to retain a received skewer 150, 150' in the hook element 110 as the hook element 110 pivots from travelling in the first horizontal direction to travelling in a vertical downward direction (Figures 5C and 7C) and the skewer 150, 150' moves along the curved inner surface 122B of the hook element 110 towards the opening 130.

As shown in Figures 5D and 7D, each hook element 110 is configured to release a held skewer 150, 150' as the hook element 110 pivots from travelling in the vertical downward direction to travelling in a second horizontal direction opposed to the first horizontal direction (the unloading orientation), whereby the skewer 150, 150' is allowed to drop from the opening under gravity into the collection tray 22.

In operation, skewer supports 100 are presented in an upright loading orientation at the start of loading path section 60a (the loading path) with each hook element 110 facing upwards and are loaded with skewered food by dropped skewers 150, 150' bearing food to be cooked vertically into the openings 130 as the skewer supports 110 pass along the loading path section 60a. Skewer supports 100 are then conveyed by conveyer chain system 50 vertically upwards in a first heating orientation along the first heating path (path section 60b) before returning to the upright loading orientation and travelling along path section 60b.

Once skewer supports 100 reach the end of path section 60b, they are conveyed vertically downwards in a second heating orientation antiparallel to the first heating orientation along the second heating path (path section 60d).

As the skewer supports 100 reach path section 60e (the unloading region), the conveyor chain system 50 presents the hook elements 110 in a downward unloading orientation with the opening 130 of each hook element 110 facing downwards. In this rotational orientation the hook elements 110 are configured to automatically release the held skewers 150, 150' allowing the skewers 150, 150' to fall under gravity into collection tray 22.

In this way, cooking apparatus 10 is provided in which foods mounted on skewers (e.g. kebabs and other skewered foods) are cooked and unloaded into collection tray 22 with minimal input from a human operator.

Figures 8A-9B illustrate details of a further embodiment of a semi-automated cooking apparatus 10' for cooking skewered food based on cooking apparatus 10 (features in common are labelled accordingly).

Cooking apparatus 10' is distinguished from cooking apparatus 10 by a vertical loading path (path section 60a') in loading region 70' replacing horizontal path section 60a and by the user of an alternative design for skewer supports 100'. Although the loading path section 60a' is shown as vertical, in some embodiments an inclined near-vertical loading orientation may be preferred. In one embodiment, the loading orientation may be 15-20° off vertical.

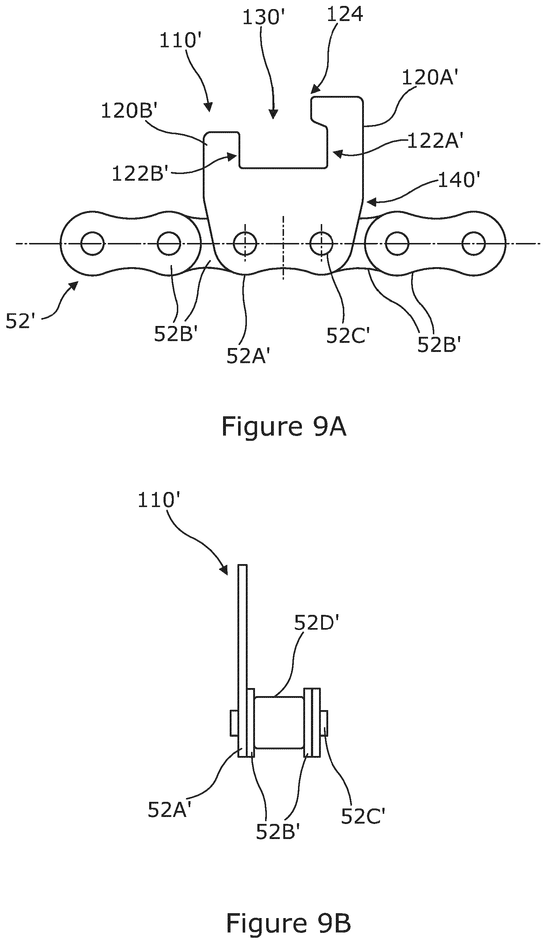

As illustrated in Figure 9A, each hook element 110' of each skewer support 100' comprises first and second jaw members 120A', 120B', but the hook element 110' includes only a single protuberant lip 124 provided on first jaw member 120A'. As illustrated in Figures 10A and 10B, the first jaw member 120A' with the protuberant lip 124 operates to retain a received skewer 150, 150" as the skewer support 100' travels along first path section 60a' in the manner described in relation to cooking apparatus 10. However, as the skewer support 100' moves from the second path section 60b' to the third path section 60c', the received skewer 150'150'' is retained against one or more vertically extending guide bar 160 mounted in a fixed position to base unit 20'. Advantageously, the use of one or a pair of laterally spaced guide bars 160 may be used to reduce rotation of the received skewer 150, 150" as the skewer support 100' transitions between the second and third path sections. This may be particularly beneficial for certain kinds of food (e.g. chicken wings or other similarly flat foods) to avoid uneven cooking/ reduce the risk of burning ends of food.

Figures 10A-F illustrate details of a yet further embodiment of a semi-automated cooking apparatus 10" for cooking skewered food based on cooking apparatus 10' illustrated in Figures 8A-C (features in common are labelled accordingly).

Cooking apparatus 10" is distinguished from cooking apparatus 10' by the replacement of first and second vertical heating stages 30', 40' with a single vertical heating stage 30".

As illustrated in Figures 10A-C, cooking apparatus 10" may be used to cook skewered foods in the same manner as described in relation to the previous embodiments.

Figures 10D-F further illustrate how cooking apparatus 10" may be used to mount baskets 170 for cooking delicate foods/foods that are difficult to skewer, such as fish, chops and chicken wings. As illustrated, each basket 170 comprises a closable wire mesh basket section 172 with one hinged side that is held closed by a small sliding latch ring (not shown), a skewer support mountable profile 174 comprising a pair of skewer-like profiles 174A, 174B extending from opposed ends of the basket 172 and a handle 176. The baskets 170 are mounted to skewer supports 100'' in exactly the same manner as skewers 150 and are retained in position by hook elements 110'/vertically extending guide bar 160'. In this way, baskets 170 are retained so that the faces of the baskets 170, and hence the food contained in the basket, are presented for even cooking. Again, the baskets 170 fall into collection tray 22'' at the end of the heating path.

Since no modification is required to the apparatus to accommodate the baskets 170, cooking apparatus 10'' may be used for skewers 150, baskets 170 or a mixture of skewers 150 and baskets 170. However, as illustrated in Figure 10D an optional guide bar extension 160" may be added on an opposed lateral side of the apparatus to the guide bar 160' to supplement guide bar 160' and to ensure correct orientation of baskets 170 as the baskets pass from the loading area towards the vertical heating stage 30".

Figures 12A-B illustrate details of a semi-automated cooking apparatus 210 in accordance with a further embodiment for cooking flat foods 300 (e.g. burgers, haloumi slices, flatbreads).

Cooking apparatus 210 comprises a base unit 220 supporting a vertical heating stage 230 and an endless conveyor system 250 driven by a drive mechanism 254.

Conveyer system 250 comprises a primary air-permeable, heat transmitting wire mesh belt conveyor 270 operative to transport food along a predetermined path 260 extending from a loading region 262, through the heating stage 230, and onward to an unloading region 264, and a secondary air-permeable, heat transmitting wire mesh belt conveyor 280 operative to move along a predetermined second path 265 in an opposed rotary direction to primary conveyor 270. As illustrated, the primary and secondary conveyors 270, 280 meet at a start point of the vertical heating stage 230 and separate at an end point of the vertical heating stage.

As shown, drive mechanism 254 comprises a plurality of sets of drive shafts 254A each supporting end sprockets 254B operative to engage opposed lateral sides of the primary and secondary conveyors 270, 280 and drive synchronous circulation of the conveyors in opposed rotary directions.

Path 260 defined by primary conveyor 270 comprises in sequence: an upper loading path (inclined path section 260a); a heating path (downward vertical path section 260b); a first return path (horizontal path section 260c); and a second return path (vertical path section 260d extending in an opposed direction to path section 260b).

Path 265 defined by secondary conveyor 280 comprises in sequence: an upper path (horizontal path section 265a; a heating path (downward vertical path section 265b); a first return path (horizontal path section 265c); and a second return path (vertical path section 265d extending in an opposed direction to path section 265b).

Vertical heating stage 230 comprises a first pair of opposed gas burners 232A, 232B defining first and second heating surfaces 234A, 234B extending on opposed sides of the heating path (vertical downward path sections 260b/265b). Gas burners 232A, 232B, 44A, 44B will again typically be radiant burners with a gas-permeable burner plate formed from a metal fibre mesh (e.g. steel wire mesh) or ceramic mesh ("ceramic gas burners").

A collection tray 222 is provided as part of the base unit 220 to collect the cooked food at the loading region 264 and to collect falling oil and cooking debris. An oil collection drum (not shown) may be provided beneath the collection tray 222 to receive oil from the tray.

As illustrated in Figure 12A, primary conveyor 270 defines a first conveyor surface 272 operative to support an underside of food 300 placed on the conveyor and secondary conveyor 280 defines a second conveyor surface 282 operative to engage a top side of food 300 as the food passes through vertical heating stage 230, with the second conveyor surface 282 moving substantially in synchrony with the first conveyor surface. Each of the first and second conveyor surfaces 272, 282 further comprise an array of food gripping spikes 290 protruding outwards from the conveyor surfaces.

In use, flat food 300 is placed onto primary conveyor 270 at the inclined loading region 262 at the top of the apparatus. As the primary conveyor 270 advances the food is gently tilted into a vertical orientation as the primary conveyors passes over chain guide plates 251, at which point it is held upright between the opposing first and second conveyor surfaces 272, 282 as the primary conveyor 270 advances the food in a downward direction along the vertical heating path 260b and through vertical heating stage 230 with food gripping spikes 290 provided on both conveyors 270, 280 acting to prevent the food from slipping downwards relative to the conveyor surfaces. At the bottom of the vertical heating path the primary and secondary conveyors 270, 280 move apart on their respective sprockets, automatically releasing the food into the collection tray 222 (the unloading region 264) as in previous embodiments.

Figures 13A-H show alternative examples of food-holder support elements 110a-g for use in the cooking apparatus of Figures 1, 8A and 11A.

Support elements 110a and 110b are variations on double-lip hook element 110 as previously described.

Support elements 110c, 110d and 110e are variations on single-lip hook element 110' as previously described, with variations 110d and 110e including an inclined pair of jaw members with leading and trailing protuberant lips respectively.

Support elements 110f and 110g are variations for use with the cooking apparatus of Figure 8A and 11A and rely upon the use of one or a pair of laterally spaced guide bars 160, 160', 160" to retain a received skewer in the support element during vertical travel.

Support elements 110h is a further variation on double-lip hook element 110 as previously described with leading and trailing lips having different profiles and different angles of inclination.

Figure 14 shows cooking apparatus 300 for cooking food comprising: a stainless steel frame 310 and a radiant burner 320 defining a vertical planar heating surface 330 bounded by the frame 310 and operative to provide an infrared heating action. Vertical heating surface 330 is notionally divided into an uppermost section 330A, a midway section 330B and a lowermost section 330C

Radiant burner 320 comprises a gas-permeable burner plate 322 forming at least a part of the vertical heating surface 330 and a fan-driven gas supply inlet 324 operative to supply mixed air/fuel to the at least one burner plate 322. An ignitor and thermostat (not shown) are operative to ignite the mixed air/fuel supplied by the gas supply inlet 324 and maintain a constant heat output from the burner plate.

Gas-permeable burner plate 322 (which may typically take the form of a metal fibre mesh (e.g. steel wire mesh)) comprises a plurality of *n* active rectangular burner plate sections 326A each spaced vertically from a neighbouring active burner plate section by one of *p* rectangular stainless steel spacer sections 326B and connected to each neighbouring active burner plate section 326A by a pair of laterally opposed active burner plate side strips 326C (with burner plate sections 326A and side strips 326C typically being formed as a single piece). The *n* active rectangular burner plate sections 326A combine with the laterally opposed active burner plate side strips 326C to form the total active area of the vertical heating surface 330. The *p* rectangular spacer sections 326B combine to form the total inactive area of the vertical heating surface 330. In the illustrated embodiment, *n =* 5 and *p* = 4.

As shown, the plurality of *n* active burner plate sections 326A are each substantially equal in area whereas the *p* spacer sections have a vertical length that increase with distance from the lowermost section 330C of the vertical heating surface whereby the active burner area decreases with height along the vertical heating surface 330.

Since the heat output density in power per unit area (W/m²) of the *n* active burner plate sections 326A fed by the single gas supply inlet 324 is identical, the effect is a radiant burner that is divided into an upper heating zone 332 (extending from the midway section 330B to the uppermost section 330A of the vertical heating surface 330) and a lower heating zone 334 (extending from midway section 330B to the lowermost section 330C of the vertical heating surface 330), wherein the upper heating zone 332 is structurally configured to provide a lower heat output density in power per unit area than the lower heating zone 334 when both the upper heating zone and lower heating zone 332, 334 are activated to generate heat. Since a component of the heat generated by the lower heating zone 334 will act to supplement the heat of the upper heating zone 332, the burner plate 322 provides a highly energy efficient way of providing even heating.

In one embodiment, the upper heating zone 332 is configured to provide a first heat output density H₁ and the lower heating zone 334 is configured to provide a second heat output density H₂, wherein H₁ is approximately equal to 0.7*H₂ (achieved by the upper heating zone 332 having approximately 2/3 of the active area of the lower heating zone 334). However, other ratios of heat output may be advantageous (e.g. for different lengths of burner plate).

In one embodiment, the apparatus 300 is operative to heat food presented in a fixed vertical position relative to the heat source.

In one embodiment, the apparatus 300 is operative to heat food passing along a substantially vertical path extending alongside the heat source (e.g. vertical heating stage of the semi-automated cooking apparatus 10, 10', 10'', 210 of the earlier embodiments).

The amount of heat generated by the apparatus 300 may be controlled by a dial that is manually set for the particular product being cooked. This in turn controls the fan which provides the gas volume combined with air in the correct proportions for efficient combustion with low nitrous oxide and carbon monoxide emission. A feedback system may be provided from the burner surface to maintain the same temperature that is set at the dial.

This combination of materials, profiles and control systems gives a more efficient infrared heating effect that is also more economical in its consumption of gas. Heat-up and cooldown times are rapid.

Electronic control of the burner fan and conveyor drive motor (where used in the vertical heating stage of the mechanical transport system of the semi-automated cooking apparatus 10, 10', 10'', 210 of the earlier embodiments) and the timed cooking of food by means of the mechanical transport system offers the following benefits:
Personnel: reduced operator involvement means economy of operation;
Efficiency: electronic control system means consistent speed of operation;
Resources: economy of gas usage means lower cost to owner and environment;
Environment: minimal smoke generated and less wasted heat.

Figures 15A and 15B illustrate a vertical rotisserie 400 for cooking a large item of food (in this example, a column of doner kebab meat 410).

As shown in Figure 15A, vertical rotisserie 400 comprises: a rotatable spit 420 operative to support the item of food to be cooked and rotate about a rotary axis "A"; and a radiant burner 430 defining a heating surface 440 operative to provide an infrared heating action.

As illustrated, the heating surface 440 is a concave part-cylindrical heating surface (e.g. concave curved surface corresponding to a hollow cylindrical sector/hollow horizontal cylindrical segment) facing the rotatable spit 420 and centred around the rotary axis "A". In this example, the concave heating surface 440 extends over an angle of substantially 100° and is formed by a concave part-cylindrical gas-permeable burner plate 450 (which may typically take the form of a metal fibre mesh (e.g. steel wire mesh)) of the radiant burner which is set within a similarly curved supporting stainless steel frame 452.

In the illustrated embodiment, the burner plate 450 comprises a main heating section 454 comprising circumferentially extending base portion 454A and a plurality of circumferentially spaced longitudinally extending sections 454B each of equal area and separated by equally sized longitudinally extending spacers 452A provided by the curved frame 452. In addition to the main heating section 454, first and second auxiliary heating sections 456A, 456B are provided at an upper end of the heating surface 440 (mirroring the geometry of the main heating section 454 but with a much shorter longitudinal length) and operative when activated to extend the effective longitudinal length of the concave curved heating surface. Each of the heating sections 454, 456A and 456B has a separate thermostat, ignitor and control circuitry and is operable independently of the main heating section. In use the gas-permeable burner plate 450 is configured to receive gas (or an air/fuel mixture) via a gas supply inlet (not shown) for ignition with gas being directed to the auxiliary heating sections if activated.

Advantageously, the width of the burner plate 450 is maintained at a constant distance from the food product giving more even cooking than existing art, with less heat being wasted. In the case of a doner-style meat column, the outer surface of the column is gradually removed for consumption causing the diameter of the meat column to gradually reduce over time. This may be compensated for by manually moving the burner plate 450 towards the meat (with the burner still wrapping part-way around the column).

The amount of heat generated by the burner is controlled by a dial that is manually set for the particular product being cooked. This in turn may control a fan which provides the air/gas mixture in the correct proportions for efficient combustion, with low nitrous oxide and carbon monoxide emissions. A feedback system may be provided from the burner surface to maintain the same temperature that is set at the dial.

Again, this combination of materials, profiles and control system gives a more efficient infrared heating effect that is also more economical in its consumption of gas. Heat-up and cooldown times are again rapid.

The burner 430 may be controlled automatically on a robotic machine operative to perform automated slicing of the cooked meat whilst it is on the spit, reducing the need for human intervention and control. Electronic control of the burner fan and drive motor, and the automatic cutting of the cooked meat, offer the following benefits:
Personnel: reduced operator involvement means increased economy of operation;
Efficiency: robotic control of cutting means increased speed of operation;
Resources: economy of gas usage means less cot to owner and environment;
Safety: reduced risk of injury means safer working conditions.

Although cooking apparatus 300 and 400 have been described in terms of pre-mixed air/fuel fan-driven radiant burners, the use of a fan-driven burner may readily be replaced by an atmospheric (fanless) burner, that is to say a burner in which gas alone is supplied to the burner via the inlet and air is separately drawn into the burner (e.g. by the Venturi effect).

## Claims

1. Apparatus (10) for cooking food, comprising:
at least one heating stage (30, 40);
a conveyor system (50) defining a predetermined path (60) extending from a loading region (70), through the at least one heating stage (30,40), and onward to an unloading region (80); and
means for releasably holding food on the conveyor system (50) as the food on the conveyor system (50) is transported through the at least one heating stage (30, 40), the means for releasably holding food comprising at least one food-holder support (100) operative to support a food holder (150)(150')(170) used to hold an item of food when the at least one food-holder support (100) is conveyed by the conveyor system (50) the loading region (70) to the unloading region (80) via the at least one heating stage (30, 40);
wherein the predetermined path (60) comprises: i) a first section (60b) extending upward from the loading region (70); ii) a substantially vertical section (60d) extending through the at least one heating stage (30, 40); and iii) a substantially horizontal section (60c) extending between the first section and the substantially vertical section;
wherein the at least one food-holder support (100) comprises one or more hook elements (110) configured to receive part of the food holder (150)(150')(170) and to allow automatic unloading of the food holder as the hook element (110) is conveyed into the unloading region (80);
wherein:
the conveyor system (50) is configured to convey food upward through the first section (60b) along the substantially horizontal section, and then downward through the substantially vertical section (60d) extending through the at least one heating stage (30, 40);
the or each hook element (110) comprises first and second jaw members (120A, 120B) spaced to define an opening (130) configured to receive a portion of the food holder (150)(150')(170);
wherein the first jaw member (120A) defines a first protuberant lip (124A) configured to retain the food holder (150)(150')(170) in the hook element (110) as the hook element (110) pivots from travelling in a first horizontal direction in the loading region to travelling in a vertical upward direction in the first section; and
wherein the second jaw member (120B) defines a second protuberant lip (124B) configured to retain the food holder (150)(150')(170) in the hook element (110) as the hook element (110) pivots from travelling in the first horizontal direction in the substantially horizontal section to travelling in a vertical downward direction in the substantially vertical section.

2. Apparatus (10) according to claim 1, wherein the at least one food-holder support (100) comprises first and second laterally spaced hook elements (110).

3. Apparatus (10) according to any of the preceding claims, wherein the or each hook element (110) is configured to maintain a predetermined orientation relative to the conveyor system (50) such that the opening (130) is always facing a predetermined direction relative to the direction of travel of the conveyor system (50).

4. Apparatus (10) according to claim 3, wherein the or each hook element (110) is configured to maintain a predetermined substantially perpendicular orientation such that the opening (130) is always facing substantially perpendicular to the direction of travel.

5. Apparatus (10) according to any of the preceding claims, the apparatus (10) further comprises at least one vertically extending guide element (160)(160') operative to maintain a food holder (150)(150')(170) in a predetermined orientation and/or position relative to the at least one food-holder support (100) as the at least one food-holder support (100) moves relative to the at least one vertically extending guide element (160)(160')

6. Apparatus r (10) according to any of the preceding claims, wherein the at least one food-holder support (100) is a skewer support operative to support a skewer or food holder with a skewer support mountable profile.

7. Apparatus (10) according to claim 6, wherein the at least one food-holder support (100) is operative to support a basket (170) with mounting profiles (174A, 174B) extending from opposed ends of the basket (170).

8. Apparatus (10) according to any of the preceding claims, wherein the conveyor system (50) comprises a conveyer chain system comprising at least one chain (52) and a chain drive mechanism (54) operative to drive movement of the at least one chain (52).

9. Apparatus (10) according to claim 8, wherein the at least one food-holder support (100) is integrally formed as part of a link plate (52A) of the at least one chain (52).

## Patentansprüche

1. Gerät (10) zum Kochen von Lebensmitteln, umfassend:
mindestens eine Heizstufe (30, 40);
ein Fördersystem (50), das einen vorbestimmten Weg (60) definiert, der sich von einem Beladebereich (70) durch die mindestens eine Heizstufe (30,40) und vorwärts zu einem Entladebereich (80) erstreckt; und
Mittel zum lösbaren Halten von Lebensmitteln auf dem Fördersystem (50), während die Lebensmittel auf dem Fördersystem (50) durch die mindestens eine Heizstufe (30, 40) befördert werden,
wobei die Mittel zum lösbaren Halten von Lebensmitteln mindestens eine Lebensmittelhalterungsstütze (100) umfassen, die betriebsfähig ist, um eine Lebensmittelhalterung (150)(150')(170) zu stützen, die verwendet wird, um ein Lebensmittel zu halten, wenn die mindestens eine Lebensmittelhalterungsstütze (100) durch das Fördersystem (50) vom Beladebereich (70) über die mindestens eine Heizstufe (30, 40) zum Entladebereich (80) befördert wird;
wobei der vorbestimmte Weg (60) Folgendes umfasst: i) eine erste Sektion (60b), die sich vom Beladebereich (70) nach oben erstreckt; ii) eine im Wesentlichen vertikale Sektion (60d), die sich durch die mindestens eine Heizstufe (30, 40) erstreckt; und iii) eine im Wesentlichen horizontale Sektion (60c), die sich zwischen der ersten Sektion und der im Wesentlichen vertikalen Sektion erstreckt;
wobei die mindestens eine Lebensmittelhalterungsstütze (100) ein oder mehrere Hakenelemente (110) umfasst, die so konfiguriert sind, dass sie einen Teil der Lebensmittelhalterung (150)(150')(170) aufnehmen und automatisches Entladen der Lebensmittelhalterung zulassen, während das Hakenelement (110) in den Entladebereich (80) befördert wird;
wobei:
das Fördersystem (50) so konfiguriert ist, dass es Lebensmittel durch die erste Sektion (60b) entlang der im Wesentlichen horizontalen Sektion nach oben und dann durch die im Wesentlichen vertikale Sektion (60d), die sich durch die mindestens eine Heizstufe (30, 40) erstreckt, nach unten befördert;
das oder jedes Hakenelement (110) erste und zweite Klemmbackenelemente (120A, 120B) umfasst, die so beanstandet sind, dass sie eine Öffnung (130) definieren, die so konfiguriert ist, dass sie einen Abschnitt der Lebensmittelhalterung (150) (150') (170) aufnimmt;
wobei das erste Klemmbackenelement (120A) eine erste vorstehende Lippe (124A) definiert, die so konfiguriert ist, dass sie die Lebensmittelhalterung (150)(150')(170) im Hakenelement (110) zurückhält, während das Hakenelement (110) von Fahren in einer ersten horizontalen Richtung im Beladebereich auf Fahren in einer vertikalen Aufwärtsrichtung in der ersten Sektion schwenkt; und
wobei das zweite Klemmbackenelement (120B) eine zweite vorstehende Lippe (124B) definiert, die so konfiguriert ist, dass sie die Lebensmittelhalterung (150)(150')(170) im Hakenelement (110) zurückhält, während das Hakenelement (110) vom Fahren in der ersten horizontalen Richtung in der im Wesentlichen horizontalen Sektion auf Fahren in einer vertikalen Abwärtsrichtung in der im Wesentlichen vertikalen Sektion schwenkt.

2. Gerät (10) nach Anspruch 1, wobei die mindestens eine Lebensmittelhalterungsstütze (100) erste und zweite seitlich beabstandete Hakenelemente (110) umfasst.

3. Gerät (10) nach einem der vorstehenden Ansprüche, wobei das oder jedes Hakenelement (110) so konfiguriert ist, dass es eine vorbestimmte Ausrichtung in Bezug auf das Fördersystem (50) so beibehält, dass die Öffnung (130) immer in eine vorbestimmte Richtung in Bezug auf die Fahrrichtung des Fördersystems (50) zeigt.

4. Gerät (10) nach Anspruch 3, wobei das oder jedes Hakenelement (110) so konfiguriert ist, dass es eine vorbestimmte im Wesentlichen rechtwinklige Ausrichtung so beibehält, dass die Öffnung (130) immer im Wesentlichen rechtwinklig zu der Fahrrichtung zeigt.

5. Gerät (10) nach einem der vorstehenden Ansprüche, wobei das Gerät (10) weiter mindestens ein sich vertikal erstreckendes Führungselement (160)(160') umfasst, das betriebsfähig ist, um eine Lebensmittelhalterung (150)(150')(170) in einer vorbestimmten Ausrichtung und/oder Position in Bezug auf die mindestens eine Lebensmittelhalterungsstütze (100) zu halten, während sich die mindestens eine Lebensmittelhalterungsstütze (100) in Bezug auf das mindestens eine sich vertikal erstreckende Führungselement (160)(160') bewegt.

6. Gerät (10) nach einem der vorstehenden Ansprüche, wobei die mindestens eine Lebensmittelhalterungsstütze (100) eine Spießstütze ist, die betriebsfähig ist, um eine Spieß- oder eine Lebensmittelhalterung mit einem montierbaren Spießstützprofil zu stützen.

7. Gerät (10) nach Anspruch 6, wobei die mindestens eine Lebensmittelhalterungsstütze (100) betriebsfähig ist, um einen Korb (170) mit Montageprofil (174A, 174B) zu stützen, das sich von gegenüberliegenden Seiten des Korbs (170) erstreckt.

8. Gerät (10) nach einem der vorstehenden Ansprüche, wobei das Fördersystem (50) ein Förderkettensystem umfasst, das mindestens eine Kette (52) und einen Kettenantriebsmechanismus (54) umfasst, der betriebsfähig ist, um Bewegung der mindestens einen Kette (52) anzutreiben.

9. Gerät (10) nach Anspruch 8, wobei die mindestens eine Lebensmittelhalterungsstütze (100) als Teil einer Kettenlasche (52A) der mindestens einen Kette (52) einstückig ausgebildet ist.

## Revendications

1. Appareil (10) de cuisson pour aliments, comprenant :
au moins un étage chauffant (30, 40) ;
un système de convoyeur (50) définissant un trajet prédéterminé (60) s'étendant d'une région de chargement (70), à travers le au moins un étage chauffant (30, 40), et jusqu'à une région de déchargement (80) ; et
un moyen permettant de maintenir de façon libérable des aliments sur le système de convoyeur (50) alors que les aliments sur le système de convoyeur (50) sont transportés à travers le au moins un étage chauffant (30, 40), le moyen permettant de maintenir de façon libérable des aliments comprenant au moins un support de porte-aliments (100) fonctionnel pour supporter un porte-aliments (150)(150')(170) utilisé pour maintenir un aliment lorsque le au moins un support de porte-aliments (100) est convoyé par le système de convoyeur (50) de la région de chargement (70) à la région de déchargement (80) par l'intermédiaire du au moins un étage chauffant (30, 40) ;
dans lequel le trajet prédéterminé (60) comprend : i) une première section (60b) s'étendant vers le haut à partir de la région de chargement (70) ; ii) une section substantiellement verticale (60d) s'étendant à travers le au moins un étage chauffant (30, 40) ; et iii) une section substantiellement horizontale (60c) s'étendant entre la première section et la section substantiellement verticale ;
dans lequel le au moins un support de porte-aliments (100) comprend un ou plusieurs éléments crochets (110) configurés pour recevoir une partie du porte-aliments (150)(150')(170) et pour permettre un déchargement automatique du porte-aliments alors que l'élément crochet (110) est convoyé dans la région de déchargement (80) ;
dans lequel :
le système de convoyeur (50) est configuré pour convoyer des aliments vers le haut à travers la première section (60b) le long de la section substantiellement horizontale, puis vers le bas à travers la section substantiellement verticale (60d) s'étendant à travers le au moins un étage chauffant (30, 40) ;
le ou chaque élément crochet (110) comprend des premier et second éléments mâchoires (120A, 120B) espacés pour définir une ouverture (130) configurée pour recevoir une portion du porte-aliments (150)(150')(170) ;
dans lequel le premier élément mâchoire (120A) définit une première lèvre protubérante (124A) configurée pour retenir le porte-aliments (150)(150')(170) dans l'élément crochet (110) alors que l'élément crochet (110) pivote d'un déplacement dans une première direction horizontale dans la région de chargement à un déplacement dans une direction verticale vers le haut dans la première section ; et
dans lequel le second élément mâchoire (120B) définit une seconde lèvre protubérante (124B) configurée pour retenir le porte-aliments (150)(150')(170) dans l'élément crochet (110) alors que l'élément crochet (110) pivote d'un déplacement dans la première direction horizontale dans la section substantiellement horizontale à un déplacement dans une direction verticale vers le bas dans la section substantiellement verticale.

2. Appareil (10) selon la revendication 1, dans lequel le au moins un support de porte-aliments (100) comprend des premier et second éléments crochets (110) latéralement espacés.

3. Appareil (10) selon l'une quelconque des revendications précédentes, dans lequel le ou chaque élément crochet (110) est configuré pour maintenir une orientation prédéterminée par rapport au système de convoyeur (50) de sorte que l'ouverture (130) soit toujours orientée dans une direction prédéterminée par rapport à la direction de déplacement du système de convoyeur (50).

4. Appareil (10) selon la revendication 3, dans lequel le ou chaque élément crochet (110) est configuré pour maintenir une orientation substantiellement perpendiculaire prédéterminée de sorte que l'ouverture (130) soit toujours orientée substantiellement perpendiculairement à la direction de déplacement.

5. Appareil (10) selon l'une quelconque des revendications précédentes, dans lequel l'appareil (10) comprend en outre au moins un élément de guidage s'étendant verticalement (160)(160') fonctionnel pour maintenir un porte-aliments (150)(150')(170) dans une orientation et/ou position prédéterminée par rapport au au moins un support de porte-aliments (100) alors que le au moins un support de porte-aliments (100) se déplace par rapport au au moins un élément de guidage s'étendant verticalement (160)(160').

6. Appareil (10) selon l'une quelconque des revendications précédentes, dans lequel le au moins un support de porte-aliments (100) est un support de brochette fonctionnel pour supporter une brochette ou un porte-aliments avec un profil pouvant être monté sur support de brochette.

7. Appareil (10) selon la revendication 6, dans lequel le au moins un support de porte-aliments (100) est fonctionnel pour supporter un panier (170) avec des profils de montage (174A, 174B) s'étendant à partir d'extrémités opposées du panier (170).

8. Appareil (10) selon l'une quelconque des revendications précédentes, dans lequel le système de convoyeur (50) comprend un système à chaîne de convoyeur comprenant au moins une chaîne (52) et un mécanisme d'entraînement à chaîne (54) fonctionnel pour entraîner un mouvement de la au moins une chaîne (52).

9. Appareil (10) selon la revendication 8, dans lequel le au moins un support de porte-aliments (100) est intégralement formé en tant qu'une partie d'une plaque de liaison (52A) de la au moins une chaîne (52).
